# EUROPÄISCHE PATENTSCHRIFT

(11) **EP 1 448 408 B1**
(45) Veröffentlichungstag und Bekanntmachung des Hinweises auf die Patenterteilung: **10.08.2005**
(21) Anmeldenummer: 02804194.5
(22) Anmeldetag: 26.11.2002
(51) Int. Cl.: B60R 11/02

(54) **HALTERUNG FÜR ELEKRONISCHE ZUSATZGERÄTE FÜR FAHRZEUGE**
MOUNTING FOR ELECTRONIC ACCESSORIES FOR VEHICLES
FIXATION D'APPAREILS ELECTRONIQUES ADDITIONNELS DANS DES VEHICULES

(30) Priorität: 01.12.2001 DE 10158443
(43) Veröffentlichungstag der Anmeldung: 25.08.2004
(73) Patentinhaber: Schanz, Jochen, 78078 Niedereschach (DE); Schwarz, Herbert, 78078 Niedereschach (DE)
(72) Erfinder: Schanz, Jochen, 78078 Niedereschach (DE); Schwarz, Herbert, 78078 Niedereschach (DE)
(74) Vertreter: Zimmermann, Günter, Dr.
(86) Internationale Anmeldenummer: PCT/EP2002/013274
(87) Internationale Veröffentlichungsnummer: WO 2003/047911

(56) Entgegenhaltungen:
- EP-A- 0 317 707
- EP-A- 1 130 204
- GB-A- 2 362 423
- US-A- 4 196 319
- US-A- 4 617 430
- US-A- 4 646 344

## Beschreibung

Die Erfindung bezieht sich auf eine Halterung für elektronische Zusatzgeräte für Fahrzeuge gemäß dem Oberbegriff des Anspruchs 1.

Aus EP 0 317 707 A ist eine derartige Halterung gemäß Oberbegriff des Anspruchs 1 bekannt.

Eine derartige Halterung ist auch durch die DE 10051676 A1 bekannt. Bei dem Zusatzgerät handelt es sich um ein Mobiltelefon, welches mittels der Halterung in einem Fahrzeuginnenraum abschließbar angeordnet ist. Zum Abschließen des Mobiltelefons wird in einen Sockel der Halterung ein schubladenartiges Teil eingeschoben, welches mit einem Zylinderschloß mit Schloßriegel versehen ist. Das schubladenartige Teil ist mit einem Bügel verbunden. Nach Einschieben der Schublade verklemmt der Bügel das Mobiltelefon in seiner Halterung. Bei einer weiteren in dieser Druckschrift beschriebenen Halterung durchsetzt ein Schwenkriegel den Sockel der Halterung und greift beim Verschließen in eine Schlitzausnehmung der Halterung ein, welche sich im unteren hinteren Bereich der Halterung befindet. Nachteiligerweise ist diese bekannte Halterung zum Sichern des Zusatzgerätes aufwendig konstruiert.

Durch die US 3333911 und WO 99/60833 A1 sind weiterhin abschließbare Halterungen für elektronische Zusatzgeräte bekannt. Bei diesen Halterungen wird die zweiteilige oder mehrteilige Halterung selbst abgeschlossen und sperrt das Zusatzgerät damit ein.

Durch die US 3822049 ist eine abschließbare Halterung bekannt, welche in einem oberen Halterungsteil einen Vorsprung mit einer Ausnehmung aufweist. Zum Verschließen des Zusatzgerätes wird durch diese Ausnehmung ein Vorhängeschloß geführt und verschlossen. Das obere Halterungsteil, an welchem sich die Ausnehmung befindet, ist mit einem entsprechenden Gegenhalterungsteil verbunden, welches an der Oberseite des Zusatzgerätes befestigt ist.

Durch die DE 19718173 A1 ist ein elektromechanisches Schließsystem zum Schutz eines Rechnersystems gegen unerlaubtes Ziehen einer Hardware-Komponente bekannt.

Durch die US 3965705 ist eine weitere abschließbare Halterung bekannt, wobei das Schloß an dem Zusatzgerät selbst montiert ist und mit einer teleskopartig ausgebildeten Halterung verriegelt.

Die Aufgabe der Erfindung wird somit darin gesehen, die Halterung der eingangs genannten Art derart weiterzuentwickeln, daß das elektronische Zusatzgerät in einfacher Weise in der Halterung gesichert werden kann.

Zur Lösung dieser Aufgabe wird erfindungsgemäß vorgeschlagen, daß eine Halterung gemäß dem Oberbegriff des Anspruchs 1 entsprechend dem kennzeichnenden Teil dieses Anspruches ausgebildet ist.

Beim Bedienen der erfindungsgemäßen Halterung wird das Zusatzgerät in die formangepaßte Halterung eingesetzt. Anschließend wird das Schloß gedreht, wobei der Riegel entweder in eine Nut des Zusatzgerätes eingreift oder eine Gerätekante des Zusatzgerätes versperrt. Damit ist eine einfache Sicherung für das Zusatzgerät in der Halterung geschaffen und die im Stand der Technik bekannte aufwendige Anordnung entfällt.

Die Erfindung wird nachstehend anhand der Zeichnung näher beschrieben. Die Zeichnung zeigt Ausführungsbeispiele der Erfindung. Hierbei stellen dar:
Fig. 1 eine Seitenansicht eines ersten Ausführungsbeispiels,
Fig. 2 eine räumliche Ansicht eines weiteren Ausführungsbeispiels,
Fig. 3 eine räumliche Ansicht eines weiteren Ausführungsbeispiels, wobei das Schloß in einem oberen Bereich angeordnet ist,
Fig. 4 eine räumliche Ansicht eines weiteren Ausführungsbeispiels, wobei der Riegel eine Gerätekante umschließt und
Fig. 5 eine Rückansicht eines weiteren Ausführungsbeispiels.

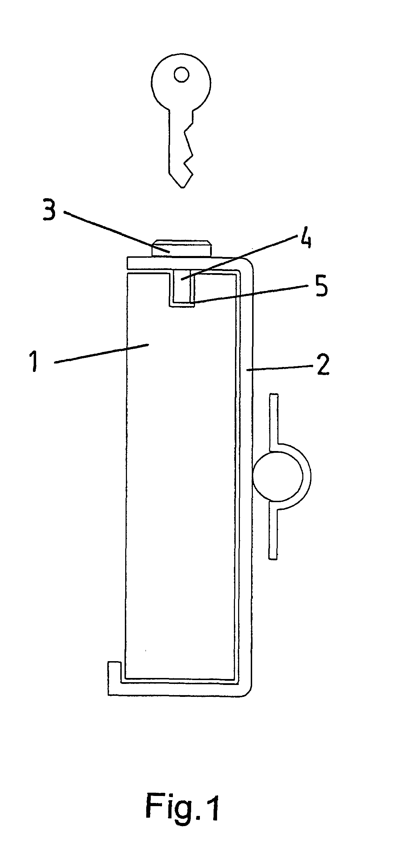

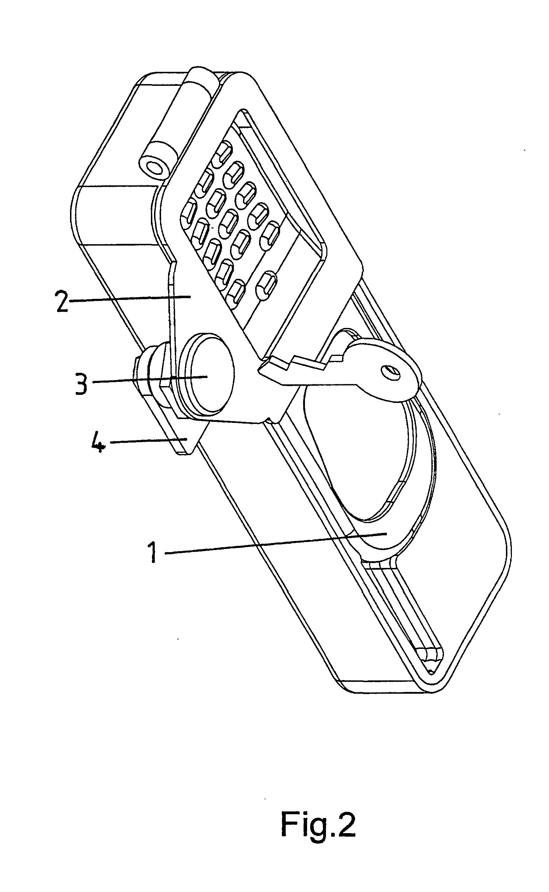

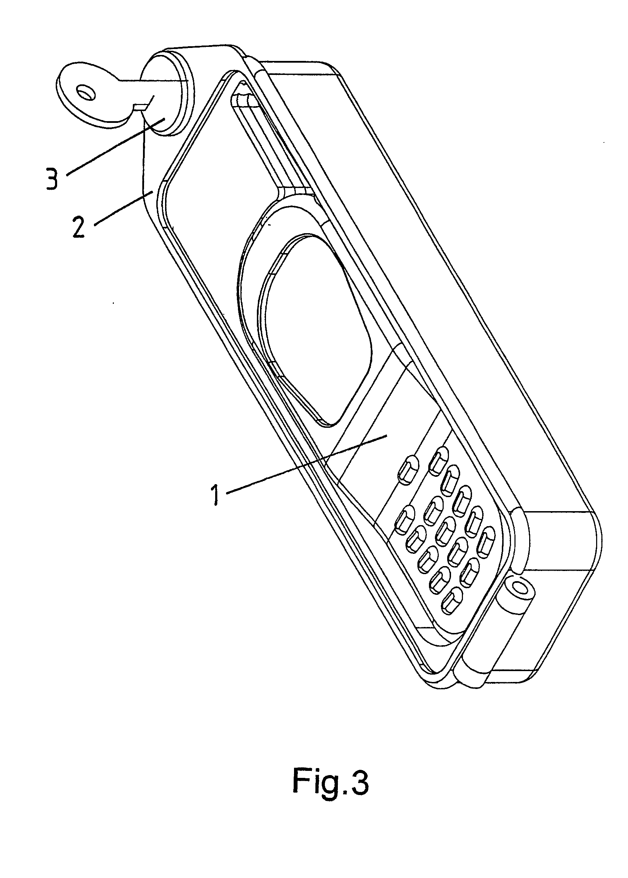

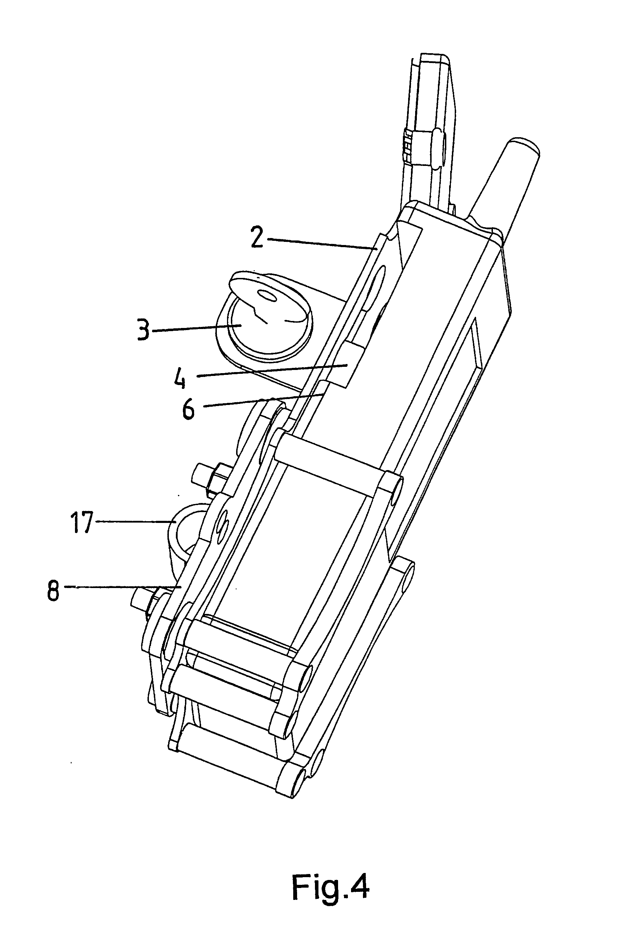

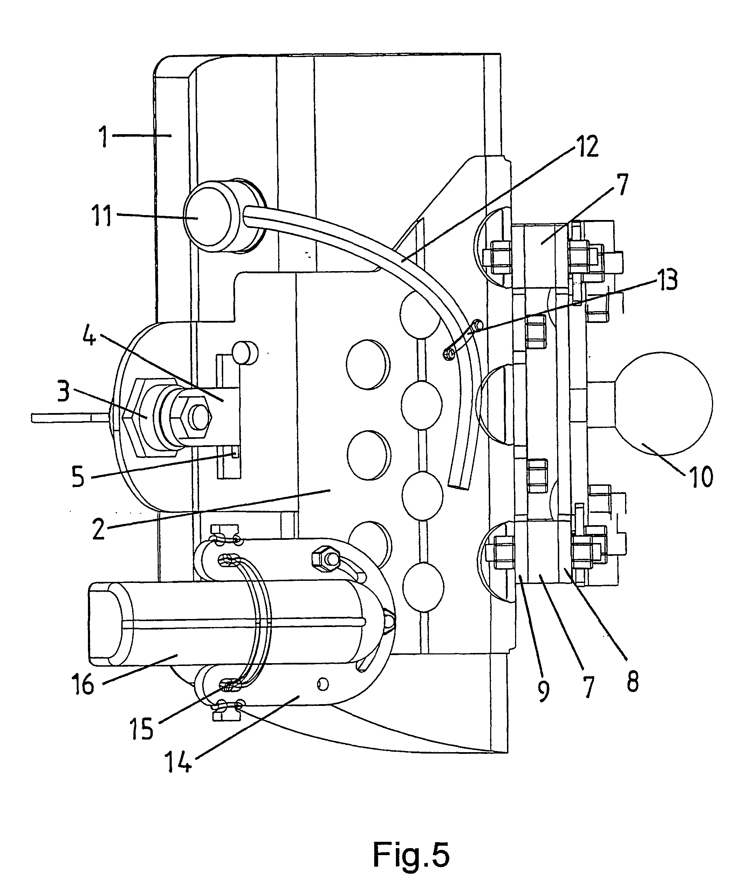

Das Zusatzgerät 1 ist in eine formangepasste Halterung 2 eingesetzt. Die Halterung 2 weist ein Schloß 3 mit einem Riegel 4 auf. Der Riegel 4 greift in eine Aussparung 5 des eingesetzten Zusatzgerätes 1 ein. Das Schloß 3 ist an der Halterung 2 angebaut. Das Schloß 3 kann sich dabei in einem Seitenbereich der Halterung 2, wie in den Figuren 1 und 2 dargestellt, befinden, oder in einem oberen Bereich der Halterung 2, wie in den Figuren 3 und 5 dargestellt. Bei all diesen Ausführungsbeispielen greift der Riegel 4 in die Aussparung 5 ein, welche an dem Zusatzgerät 1 selbst angeordnet ist. Bei dem Ausführungsbeispiel gemäß Figur 4 umgreift der Riegel 4 eine Gehäusekante 6 des Zusatzgerätes 1 und sperrt damit diese Gehäusekante 6, so daß das Zusatzgerät 1 nicht entfernt werden kann.

Da insbesondere elektronische Zusatzgeräte 1 wie Mobiltelefone, GPS-Geräte oder Funkgeräte in die Halterung 2 eingesetzt werden, ist diese gegen Vibrationen geschützt. Wie in Figur 5 dargestellt, weist die Halterung 2 zur Vibrationsentkopplung Vibrationselemente 7 auf, welche zwischen einer unteren Bodenplatte 8 und einer oberen Bodenplatte 9 angeordnet sind. Die Halterung 2 kann über die untere Bodenplatte 8 mittels Halteschellen 17 oder mittels eines Kugeladapters 10 an einem Fahrzeug befestigt werden. In der Halterung 2 ist ein Gerätestecker 11 für ein Strom-Datenkabel 12 integriert. Die Leitung 12 ist an einer Kabelsicherung 13 fixiert. Weiterhin hat die Halterung 2 einen drehbaren Antennenhalter 14 mit Antennensicherung 15, damit eine Antenne 16 geschützt und in ihrer Lage stabilisiert wird. Die Stabilisierung der Antenne 16 erfolgt, wie aus Figur 5 ersichtlich, dadurch, daß die als O-Ring ausgebildete Antennensicherung 15 die Antenne 16 an dem Antennenhalter 14 festklemmt.

Die Erfindung ist nicht auf die dargestellten Ausführungsbeispiele beschränkt. So können mehrere Verriegelungen vorgesehen sein, und vorteilhafterweise können eine oder mehrere Verriegelungen über ein zentrales Schloß, vorzugsweise das Zündschloß, geschaltet werden. Weiterhin kann die Halterung sämtliche Funktionen einer Instrumentierung und Kontrollampen enthalten.

## Patentansprüche

1. Halterung für elektronische Zusatzgeräte für Fahrzeuge, wobei an der Halterung (2) ein Schloß mit einem Riegel (4) angebracht ist und die Halterung (2) formangepaßt das einzusetzende elektronische Zusatzgerät (1) umschließt und der Riegel (4) in eine Geräteaussparung (5) greift,
**dadurch gekennzeichnet,**
**daß** das Schloß ein mechanisches Schloß ist, welches durch Einstecken eines Schlüssels in das Schloß und Drehen des Schlüssels in dem Schloß mit der Hand betätigbar ist, und die Geräteaussparung (5) eine Nut ist, welche entweder unmittelbar mit dem Riegel (4) verriegelt, oder der Riegel (4) an einer Gerätekante (6) versperrt.

2. Halterung nach Anspruch 1,
**dadurch gekennzeichnet,**
**daß** die Halterung (2) durch Vibrationselemente (7) vibrationsentkoppelt ist.

3. Halterung nach einem der Ansprüche 1 oder 2,
**dadurch gekennzeichnet,**
**daß** die Halterung (2) mit Halteschellen (17) befestigt werden kann.

4. Halterung nach einem der Ansprüche 1 oder 2,
**dadurch gekennzeichnet,**
**daß** die Halterung (2) mit einer Kugelaufnahme (10) befestigt werden kann.

5. Halterung nach einem der vorhergehenden Ansprüche,
**dadurch gekennzeichnet,**
**daß** ein Gerätestecker (11) in die Halterung (2) integriert ist.

6. Halterung nach einem der vorhergehenden Ansprüche,
**dadurch gekennzeichnet,**
**daß** eine Stromversorgung (12) an der Halterung (2) befestigt werden kann.

7. Halterung nach einem der vorhergehenden Ansprüche,
**dadurch gekennzeichnet,**
**daß** die Halterung (2) Antennenanschlüsse und/oder Datenanschlüsse aufweist.

8. Halterung nach einem der vorhergehenden Ansprüche
**dadurch gekennzeichnet,**
**daß** ein Antennenhalter (14) an der Halterung (2) vorgesehen ist.

9. Halterung nach Anspruch 8
**dadurch gekennzeichnet,**
**daß** der Antennenhalter (14) eine Antennensicherung (15) für eine Antenne (16) aufweist.

## Claims

1. Mounting device for electronic accessories for vehicles, wherein a lock with a bolt (4) is attached to the mounting device (2) and the mounting device (2) encloses the electronic accessory (1) to be inserted in a manner adapted with respect to shape and the bolt (4) engages in an apparatus recess (5), **characterised in that** the lock is a mechanical lock which can be actuated by hand by insertion of a key into the lock and turning the key in the lock, and the apparatus recess (5) is a groove which either locks directly with the bolt (4), or the bolt (4) locks on an apparatus edge (6).

2. Mounting device according to claim 1, **characterised in that** the mounting device (2) is vibration-decoupled by vibration elements (7).

3. Mounting device according to either of claims 1 or 2, **characterised in that** the mounting device (2) can be fastened with mounting clamps (17).

4. Mounting device according to either of claims 1 or 2, **characterised in that** the mounting device (2) can be fastened with a spherical receiver (10).

5. Mounting device according to any one of the preceding claims, **characterised in that** an apparatus plug (11) is integrated into the mounting device (2).

6. Mounting device according to any one of the preceding daims, **characterised in that** a power supply (12) can be fastened to the mounting device (2).

7. Mounting device according to any one of the preceding claims, **characterised in that** the mounting device (2) has antenna connections and/or data connections.

8. Mounting device according to any one of the preceding claims, **characterised in that** an antenna holder (14) is provided on the mounting device (2).

9. Mounting device according to claim 8, **characterised in that** the antenna holder (14) has an antenna securing means (15) for an antenna (16).

## Revendications

1. Support pour appareils électroniques additionnels dans les véhicules, sur lequel support (2) est installée une serrure comportant un pêne (4) et lequel support (2) entoure l'appareil électronique additionnel (1) à poser d'une manière adaptée à sa forme, le pêne (4) s'engageant dans un évidement de l'appareil (5),
**caractérisé par le fait**
**que** la serrure est une serrure mécanique qui peut être actionnée à la main par insertion d'une clé dans la serrure et rotation de la clé dans la serrure, et que l'évidement de l'appareil (5) est une rainure qui verrouille directement avec le pêne (4) ou bloque le pêne (4) contre une arête de l'appareil (6).

2. Support selon la revendication 1,
**caractérisé par le fait**
**que** le support (2) est découplé des vibrations par des éléments anti-vibrations (7).

3. Support selon l'une des revendications 1 ou 2,
**caractérisé par le fait**
**que** le support (2) peut être fixé au moyen de colliers de soutien (17).

4. Support selon l'une des revendications 1 ou 2,
**caractérisé par le fait**
**que** le support (2) peut être fixé au moyen d'une fixation sphérique (10).

5. Support selon l'une des revendications précédentes,
**caractérisé par le fait**
**qu'**une fiche d'appareil (11) est intégrée dans le support (2).

6. Support selon l'une des revendications précédentes,
**caractérisé par le fait**
**qu'**une alimentation électrique (12) peut être fixée sur le support (2).

7. Support selon l'une des revendications précédentes,
**caractérisé par le fait**
**que** le support (2) présente des raccords d'antenne et/ou des raccords de données.

8. Support selon l'une des revendications précédentes,
**caractérisé par le fait**
**qu'**il est prévu un support d'antenne (14) sur le support (2).

9. Support selon la revendication 8,
**caractérisé par le fait**
**que** le support d'antenne (14) présente un dispositif de stabilisation d'antenne (15) pour une antenne (16).
